# EUROPEAN PATENT APPLICATION

(11) **EP 4 541 694 A1**
(43) Date of publication of application: **23.04.2025**
(21) Application number: 24206347.7
(22) Date of filing: 14.10.2024
(51) Int. Cl.: B62D 7/08, B62D 5/04, B66F 9/07

(54) **INDUSTRIAL TRUCK WITH IMPROVED STEERING AXLE**

(30) Priority: 16.10.2023 IT 202300021492
(71) Applicant: Toyota Material Handling Manufacturing Italy S.p.A, 40132 Bologna (IT)
(72) Inventor: NARDELLA, Andrea Federico, 40132 Bologna (IT)
(74) Representative: Hoffmann Eitle

(57) **Abstract**

An industrial truck equipped with lifting means for handling a load, comprising a steering axle (11) comprising an axle body (12) and two wheel supporting elements (13) arranged at opposite ends of the axle body (12), wherein each of the two wheel supporting elements is mounted on the axle body so as to able to rotate about a substantially vertical axis. The industrial truck comprises two gear motors (14) each equipped with a motor shaft (16), each of the two gear motors being respectively associated with one of the two wheel supporting elements; each of the two gear motors (14) is mounted on the steering shaft (11) so that the motor shaft (16) is coaxial with the axis of rotation of the respective wheel supporting element (13), said motor shaft being mechanically coupled to the respective wheel supporting element in order to transmit a rotary movement about the axis of rotation of the wheel supporting element, in order to perform steering.

## Description

### Field of the invention

The present invention relates to an industrial truck equipped with an improved steering axle.

### Technical background

The realization of industrial trucks, such as a forklift, equipped with lifting means for handling a load, for example a fork for lifting loads, such as a pallet, is known in the art. Known industrial trucks can be equipped with an endothermic and/or electric traction motor and normally include a steering axle provided with two steering wheels, for example the front axle.

In the prior art, the steering of the wheels can be controlled via a steering wheel operated by a forklift user, for example via a steer-by-wire control. Typically, the steering axle may comprise a hydraulic actuator, in the form of a cylinder substantially parallel to the extension of the axle, which provides for transmitting the steering movement of the axle elements that support the wheel hub. By using this type of hydraulic steering, it has been found over time that, especially in the case of four-wheel electric counterbalanced forklifts, the industrial truck has a low response speed (response times) of the hydraulic steering, thus affecting the ability to perform operations quickly. In addition, the hydraulic cylinder must be dimensioned in accordance with the thrusts necessary to transmit the steering of the wheels, resulting in a considerable cost and overall dimensions of the steering axle.

### Summary of the invention

In light of the problems highlighted above, an object of the present disclosure is to provide an industrial truck provided with an improved steering axle. A further object is to provide an industrial truck provided with a steering axle having a lower response time; a further object is to provide an industrial truck that can perform operations more quickly. A further object is to provide an industrial truck with cheaper components; a further object is to provide an industrial truck with steering axle components with reduced dimensioning. A further object is to increase the safety level of the truck.

In light of the above, an industrial truck equipped with lifting means for handling a load is provided, comprising a steering axle comprising an axle body and two wheel supporting elements arranged at opposite ends of the axle body, wherein each of the two wheel supporting elements is mounted on the axle body so as to able to rotate about a substantially vertical axis,
characterized in that it comprises two gear motors each equipped with a motor shaft, each of the two gear motors being associated respectively with one of the two wheel supporting elements,
wherein each of the two gear motors is mounted on the steering shaft so that the motor shaft is coaxial with the axis of rotation of the respective wheel supporting element, said motor shaft being mechanically coupled to the respective wheel supporting element in order to transmit a rotary movement about the axis of rotation of the wheel supporting element, in order to perform steering.

Preferably, the motor shaft of each gear motor is coupled to the respective wheel supporting element by a mechanical joint.

Preferably, each mechanical joint comprises a first toothing adapted to engage with a corresponding toothing formed on the motor shaft and a second toothing adapted to engage with a corresponding toothing formed on the wheel supporting element so that the mechanical coupling between the motor shaft and the wheel supporting element is realized.

Preferably, each wheel supporting element includes a seat intended to receive the mechanical joint.

Preferably, each mechanical joint includes a seat intended to receive the motor shaft of the respective gear motor.

Preferably, a part of each mechanical joint is accommodated in a seat formed in the axle body. Preferably, for each mechanical joint, the seat in the mechanical joint intended to receive the motor shaft is at the height of the cavity of the axle body that receives a part of the mechanical joint.
Preferably, each motor shaft and the respective wheel supporting element are substantially integral.

Preferably, the steering axle comprises a hydraulic actuator connected to at least one of the two wheel supporting elements so as to transmit a horizontal thrust to a point positioned at a distance from the axis of rotation of the respective wheel supporting element; said hydraulic actuator cooperating with the gear motors to transmit to the wheel supporting element a steering rotation about the axis of rotation of the wheel supporting element. Preferably, also in case the hydraulic actuator is present, the gear motors are configured to be able to transmit a steering of the axle in case the hydraulic cylinder is not operative, for example due to a malfunction.

Preferably, the industrial truck comprises control means configured to receive steering command signal as input from a steering interface operated by a user of the industrial truck, said control means being connected to the gear motors and/or the hydraulic actuator to send, to the gear motors and/or to the hydraulic actuator, control signals intended to drive the steering rotation of the wheel supporting elements based on the steering command signal received as input from the user.

Preferably, the gear motors are brushless gear motors and/or spur gear motors.

Preferably, the industrial truck is an electrically driven truck, preferably an electrically driven counterbalanced forklift.

### Brief description of the drawings

This and other advantages of the present invention will be illustrated with reference to an exemplary embodiment of the invention described with reference to the accompanying drawings.

In the drawings:
- figure 1 schematically illustrates an industrial truck;
- figure 2 illustrates the steering axle of the industrial truck;
- figure 3 illustrates a sectional view of the steering axle;
- figure 4 illustrates a schematic view of the control means of the industrial truck.

### Detailed description

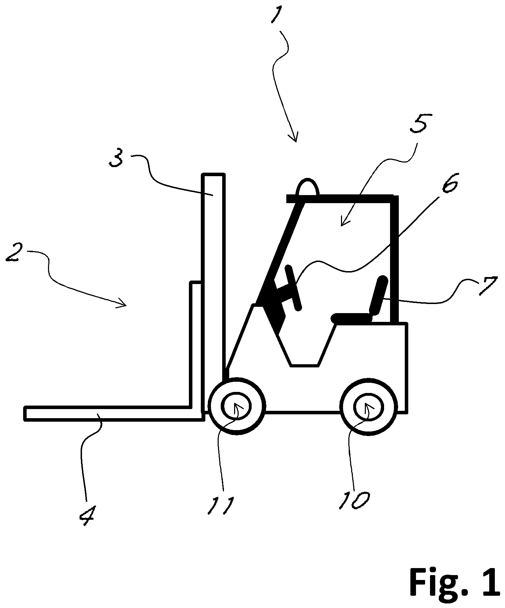

With reference to the figures, in figure 1 an industrial truck 1 is shown, for example a forklift truck; the present disclosure is however not limited to this type of industrial truck and is also directed to other types of known industrial trucks to be used for example in a warehouse, an industrial site or the like. The industrial truck 1 includes lifting means for handling a load 2; for example, the load lifting means 2 comprise an upright 3 along which a fork 4, or other gripping device, is slidably mounted. The upright 3 can be of the type flexible around a horizontal axis. The upright 3 is mounted in the anterior front portion of the industrial truck 1. The upright 3 is substantially vertical. The industrial truck 1 includes a cab 5 for a user of the truck. A seat 7 for the user is positioned in the cabin. The truck further includes a steering wheel 6 by means of which the user can control the steering of the industrial truck. The industrial truck 1 can be equipped with two axles, a front axle 11 and a rear axle 10. One of the axles is a steering axle, preferably the front axle 11. The industrial truck 1 may preferably be four-wheeled, i.e. two wheels for each axle; however, the industrial truck 1 could also have a different number of wheels, for example three. The industrial truck 1 may preferably be of the electric type, i.e. with an electric traction motor. Alternatively, the industrial truck 1 could also be equipped with an endothermic or hybrid drive type motor. Preferably, the industrial truck is an electrically driven counterbalanced forklift.

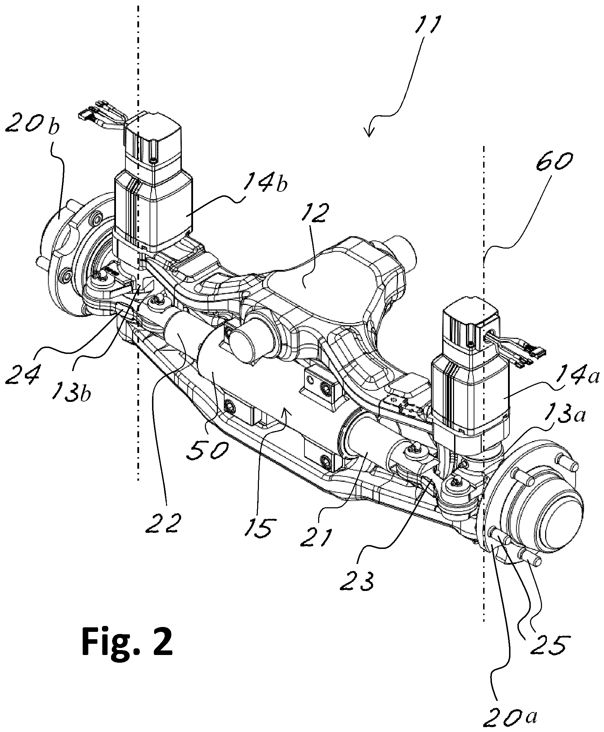

Figure 2 shows the steering axle 11 according to a possible embodiment. The steering axle 11 may preferably comprise an axle body 12 and two wheel supporting elements 13a, 13b (also known as spindles) arranged at opposite ends of the axle body 12. Each of the two wheel supporting elements 13a, 13b is mounted on the axle body 12 so as to able to rotate about a respective substantially vertical axis 60. The support elements 13a, 13b are connected to a respective hub 20a, 20b on which a wheel of the industrial truck can be mounted by means of known fixing means 25.

The axle body 12 has a longitudinal extension substantially transverse to the direction of travel of the industrial truck 1. The steering axle may comprise a hydraulic actuator 15 intended to transmit a substantially horizontal thrust to the wheel supporting elements 13. Preferably, the hydraulic actuator comprises a hydraulic cylinder 15. The hydraulic cylinder 15 comprises a fixed part 50 which is fixed integrally to the axle body 12, and a movable part 21, 22 intended to transmit a thrust to the wheel supporting elements, in order to perform steering. The movable part 21, 22 may include two parts integral with each other or with independently and/or correlated controllable movement possibilities; each of the movable parts 21, 22 operates on a corresponding wheel supporting element 13a, 13b. Preferably each movable part 21, 22 is connected to the respective wheel supporting element 13a, 13b by means of a connecting rod 23, 24. Each connecting rod 23, 24 is hinged at opposite ends on one side to the respective movable part 21, 22 and on the other side to the wheel supporting element 13a, 13b. The hingings have a substantially vertical axis; the hinging axis between the connecting rod and the wheel supporting element 13a, 13b is spaced from the axis of rotation of the wheel supporting element with respect to the axle body 12.

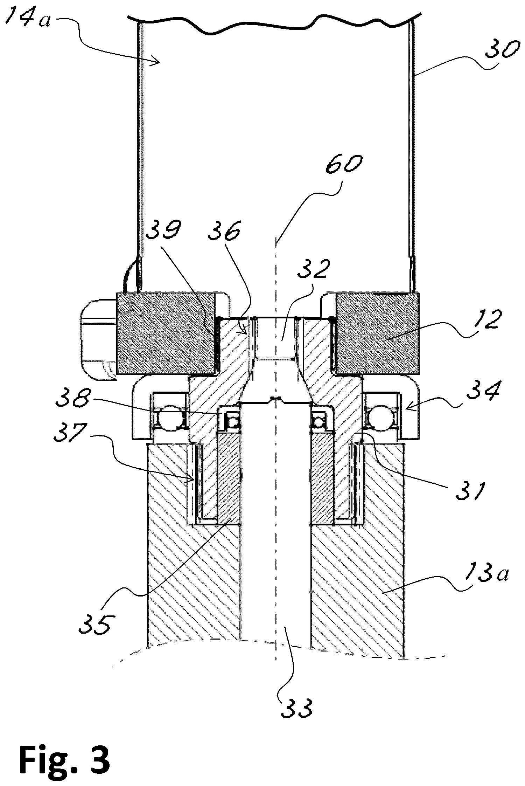

Preferably, the industrial truck 1 comprises two gear motors 14a, 14b each equipped with a motor shaft 32 (shown in figure 3). Each of the two gear motors 14a, 14b is respectively associated with one of the two wheel supporting elements 13a, 13b.

Preferably, each of the two gear motors 14a, 14b is mounted on the steering shaft 11 so that the motor shaft 32 is coaxial with the axis of rotation of the respective wheel supporting element 13a, 13b. Preferably, the motor shaft 32 is mechanically coupled to the respective wheel supporting element 13a, 13b in order to transmit a rotary movement about the axis of rotation 60 of the wheel supporting element 13a, 13b, in order to perform steering. Preferably, the gear motors 14a, 14b are mounted above the axle body 12. In a preferred embodiment, the gear motors 14a, 14b are brushless gear motors. In a preferred embodiment, the gear motors 14a, 14b are spur gear motors; this configuration may lead to a further reduction in the overall dimensions. However, other types of gear motors may also be employed. Each gear motor 14a, 14b is advantageously associated with a respective control board (not shown in the figure); the control board can be applied in different positions on the steering axle or on the frame of the industrial truck; for example the control board of the gear motor can be connected to control means of the industrial truck via a bus, as described below.

The hydraulic actuator 15 cooperates with the gear motors 14 to transmit to the wheel supporting element a steering rotation about the axis of rotation of the wheel supporting element. However, the hydraulic actuator 15 could also be absent. In other words, the gear motors 14a, 14b can be suitably configured to transmit the steering rotation to the wheels even in the absence of the hydraulic cylinder 15.

Furthermore, even in the presence of the hydraulic cylinder 15, the gear motors can be configured to be able to transmit the rotation for the steering of the wheels; this configuration can be useful to increase safety and allow the operator to steer the truck even in the event of failure of the hydraulic actuator.

Figure 3 shows a section of the gear motor 14a and of the corresponding wheel supporting element 13a according to a vertical plane containing the axis of rotation 60 of the wheel supporting element 13a. The gear motor 14b can be associated with the corresponding wheel supporting element 13b in a manner identical to the one described below for the gear motor 14a.

The gear motor 14a may include a case 30 that is fixed to the axle body 12. The case 30 contains the gear motor 14a and the reduction gears (not shown in the figure). The gear motor 14a includes a motor shaft 32 arranged to rotate about the axis 60, preferably substantially vertical. Preferably, the motor shaft of the gear motor 14a is coupled to the respective wheel supporting element 13a by a mechanical joint 31. The gear motor 14a is connected by a joint 31 formed by two terminals that have as an interface two toothed crowns that make the support element 13a (also known as "spindle" in technical jargon) substantially integral with the gear motor 14a itself, so that the torque can be transmitted to the spindle-wheel system. In particular, the mechanical joint 31 comprises a first toothing 36 adapted to engage with a corresponding toothing formed on the motor shaft 32 and a second toothing 37 adapted to engage with a corresponding toothing formed on the wheel supporting element 13a so that the mechanical coupling between the motor shaft 32 and the wheel supporting element 13a is realized. Preferably, the wheel supporting element 13a includes a seat intended to receive the mechanical joint 31. Preferably, the mechanical joint 31 includes a seat intended to receive the motor shaft 32 of the respective gear motor 14. In the seats formed in the support element and in the joint there are toothings (or toothed crowns) that realize the coupling between the motor shaft 32 and the joint 31 and between the joint 31 and the spindle 13a; the seats are substantially coaxial to the axis 60 of rotation of the motor shaft 32 and of the wheel supporting element 13a. Each motor shaft 32 and the respective wheel supporting element 13a are substantially integral.

Preferably, a bearing 34 is interposed between the axle body 12 and the wheel supporting element 13a in a direction parallel to the axis of rotation 60, for example a thrust bearing. Preferably, the bearing 34 is arranged so as to externally surround the joint 31. Preferably, the wheel supporting element 13a is rotatably mounted on a pin 33, the axis of which corresponds to the axis 60. The pin 33 is integral with the axle body 12. The pin 33 is connected below the axle body 12. A bushing 35 coaxial with the pin 33 is fitted on the pin 33. The joint 31 includes an axial cavity receiving the bushing 35. An inner bearing 38 is arranged between the bushing 35 and the joint 31 in a direction parallel to the axis of rotation 60. The bushing 35 is arranged between the inner bearing 38 and the wheel supporting element 13a in a direction parallel to the axis of rotation. The inner bearing 38 is arranged substantially at the height of the bearing 34 in a direction parallel to the axis of rotation 60. The inner bearing 38 is arranged within an axial cavity of the joint. The motor shaft 32 engages with the joint 31 within a cavity formed in the axle body 12.

The joint 31 includes a first end portion that forms the seat in which the motor shaft 32 is accommodated, a central portion, and a second end portion that is accommodated in the seat formed in the wheel supporting element 13a. The first portion of the joint 31 is arranged within a cavity formed in the axle body 12. Preferably, a bearing, for example a drawn-cup needle roller bearing 39, is provided between the outer surface of the first portion of the joint 31 and the axle body 12. Preferably, the central portion of the joint 31 is arranged at the height of the outer bearing 34 and of the inner bearing 38. Preferably, the second end portion of the joint 31 includes a cavity within which the bushing 35 is positioned. Preferably, the joint 31 comprises a through axial cavity that crosses the joint from the first to the second end portion. Advantageously, the through cavity has a smaller diameter at the first end portion than at the second end portion. The through cavity in the joint 31 includes a truncated-cone portion and two cylindrical portions that are joined by the truncated-cone portion. The joint 31 has cylindrical symmetry. Preferably, the second end portion of the joint (or lower portion) has a larger outer diameter than the first end portion of the joint (or upper portion). Preferably, the central portion of the joint 31 at the height of the outer bearing 34 has a larger outer diameter than the first and second end portion of the joint.

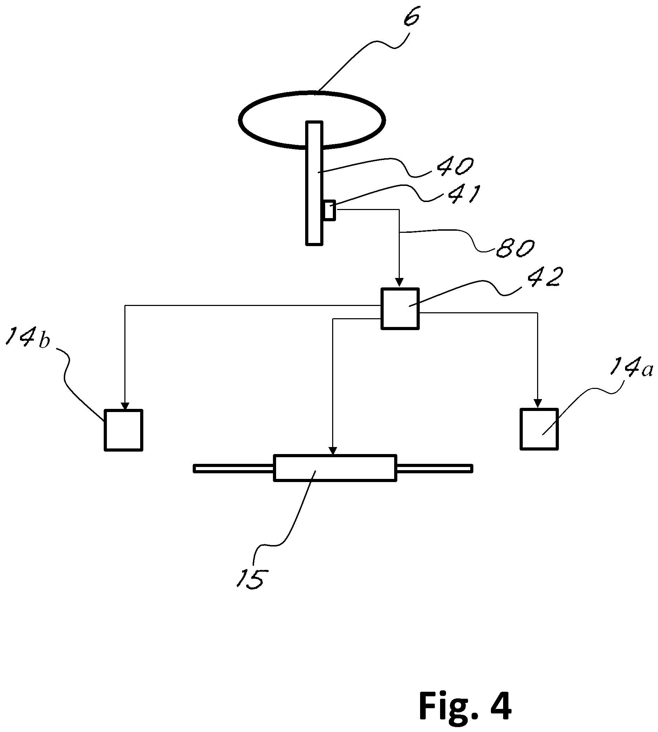

Figure 4 schematically shows the steering axle control system. The figure represents a steering wheel 6 connected to a rotating support 40 (or steering column) of the steering wheel, which form part of an interface as input for the steering command or steering interface. It is understood that another type of steering command input interface may also be provided. The steering interface is configured to generate a steering command signal 80 indicating the extent of the steering the operator wants to transmit to the steering axle. The steering command signal 80 may be generated by a sensor or encoder associated with the steering wheel 6 and/or with the steering column 40 or, more generally, associated with the steering interface; the steering interface could also include a different type of sensor or mechanics, for example a joystick or any other type of interface adapted to receive a command input.

The industrial truck further comprises control means 42 configured to receive as input the steering command signal 80 from the user-operated steering interface of the industrial truck. The control means 42 can be realized according to any known hardware and/or software configuration; for example, the control means can include a controller unit, or a plurality of control devices connected to each other with a distributed architecture; the control means can include a control board, for example a control board connected to a bus on board the machine, for example a CAN or Ethernet bus, although any type of known bus can be used.

The control means 42 are connected to the gear motors 14 and/or to the hydraulic actuator 15 to send, to the gear motors and/or to the hydraulic actuator, control signals intended to drive the steering rotation of the wheel supporting elements 13a,b based on the steering command signal 80 received as input from the user. In particular, the gear motors 14 and/or the hydraulic actuator 15 can include a control board through which they can exchange messages with the control means 42; for example, the control boards (or controllers) of the gear motors 14 and/or of the hydraulic actuator 15 can be connected to a bus on board the machine to receive steering commands from the control means. It is understood that other known hardware and/or software configurations can also be designed for controlling the actuators and gear motors.

When the operator of the counterbalanced forklift gives the input through the steering column to the hydraulic steering (hydraulic actuator 15) and to the controllers of the gear motors 14a, 14b, the steering jack (hydraulic actuator 15) and the gear motors 14a, 14b, suitably controlled electronically, transmit, in a suitably coordinated manner, the torque to the spindles 13a, 13b thus making the steering operation faster and more comfortable for the operator. The present disclosure is not limited to the control embodiment described above. For example, the present disclosure can be applied in case of steer-by-wire, but also in case of a direct mechanical connection between the steering wheel and the wheel supporting elements.

Ultimately, a particularly advantageous embodiment involves the introduction of two brushless gear motors with spur gears (and respective controllers, one for each gear motor) with nominal voltage equal to the battery voltage of the reference counterbalanced truck (e.g. 48V), mounted in axis with the spindle-hub system. The gear motors are connected to the spindle-hub by a joint, supported by a bearing, formed by two toothed crowns that connect the shaft of the motor itself to a seat in the spindle. Each time the operator performs a steering operation, the system, by sensing the input of the revolution sensor mounted on the steering column, performs a rotation of the spindles/hubs through the combined effect of:
- Pair of gear motors
- Axial translation Hydraulic steering cylinder

The present disclosure allows to have steering systems for four-wheel counterbalanced forklifts that offer greater comfort for the operator, performing faster operations than the traditional hydraulic steering thanks to the electronic control of the gear motors. In addition, this system makes it possible to use a steering cylinder with a lower thrust section (and therefore lower diameters and pressures), given the contribution of the gear motors, thus reducing the costs of the hydraulic part of the steering.

## Claims

1. Industrial truck equipped with lifting means for handling a load, comprising a steering axle (11) comprising an axle body (12) and two wheel supporting elements (13) arranged at opposite ends of the axle body (12), wherein each of the two wheel supporting elements is mounted on the axle body so as to be able to rotate about a substantially vertical axis,
**characterized in that** it comprises two gear motors (14) each equipped with a motor shaft (32), each of the two gear motors being combined with one of the two wheel supporting elements, respectively,
wherein each of the two gear motors (14) is mounted on the steering axle (11) so that the motor shaft (32) is coaxial with the axis of rotation of the respective wheel supporting element (13), said motor shaft being mechanically coupled to the respective wheel supporting element in order to transmit a rotary movement about the axis of rotation of the wheel supporting element, in order to perform steering.

2. Industrial truck according to claim 1, wherein the motor shaft of each gear motor (14) is coupled to the respective wheel supporting element (13) by a mechanical joint (17).

3. Industrial truck according to claim 2, wherein each mechanical joint (31) comprises a first toothing adapted to engage with a corresponding toothing formed on the motor shaft (16) and a second toothing adapted to engage with a corresponding toothing formed on the wheel supporting element (13) so that the mechanical coupling between the motor shaft (32) and the wheel supporting member (13) is realized.

4. Industrial truck according to claim 2 or 3, wherein each wheel supporting element (13) includes a seat intended to receive the mechanical joint (31).

5. Industrial truck according to claim 2, 3 or 4, wherein each mechanical joint (31) includes a seat intended to receive the motor shaft (32) of the respective gear motor (14).

6. Industrial truck according to one of claims 1 to 5, wherein each motor shaft (16) and the respective wheel supporting element (13) are substantially integral.

7. Industrial truck according to one of claims 1 to 6, wherein the steering axle (11) comprises a hydraulic actuator (15) connected to at least one of the two wheel supporting elements (13) so as to transmit a horizontal thrust to a point positioned at a distance from the axis of rotation of the respective wheel supporting element (13); said hydraulic actuator (15) cooperating with the gear motors (14) to transmit to the wheel supporting element a steering rotation about the axis of rotation of the wheel supporting element.

8. Industrial truck according to one of claims 1 to 7, comprising control means configured to receive a steering command signal as input from a steering interface operated by a user of the industrial truck, said control means being connected to the gear motors (14) and/or the hydraulic actuator (15) to send, to the gear motors and/or the hydraulic actuator, control signals intended to drive the steering rotation of the wheel supporting elements (13) based on the steering command signal received as input from the user.

9. Industrial truck according to one of claims 1 to 8, wherein the gear motors (14) are brushless gear motors and/or spur gear motors.

10. Industrial truck according to one of claims 1 to 9, wherein the industrial truck is an electrically driven truck, preferably an electrically driven counterbalanced forklift.
